Europäisches Patentamt

European Patent Office

Office européen des brevets

(19)

(11) Veröffentlichungsnummer: **0 198 373 B1**

# EUROPÄISCHE PATENTSCHRIFT

(12)

(45) Veröffentlichungstag der Patentschrift: 03.07.91

(51) Int. Cl.⁵: **A01M 13/00,** A01M 1/20

(21) Anmeldenummer: **86104684.5**

(22) Anmeldetag: **05.04.86**

(54) **Elektrisches Gerät zum Verdampfen von insektizidem Wirkstoff.**

(30) Priorität: **13.04.85 DE 3513307**

(43) Veröffentlichungstag der Anmeldung:
**22.10.86 Patentblatt 86/43**

(45) Bekanntmachung des Hinweises auf die
Patenterteilung:
**03.07.91 Patentblatt 91/27**

(84) Benannte Vertragsstaaten:
**AT BE CH DE FR GB IT LI NL SE**

(56) Entgegenhaltungen:
**FR-A- 2 396 551**
**GB-A- 673 429**
**US-A- 2 931 880**
**US-A- 4 084 079**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Schröder, Peter, Dr.
Gerretsfeld 5
W-4060 Viersen 1(DE)**

**Beschreibung**

Die Erfindung richtet sich auf ein elektrisches Gerät bestehend aus einem Gerätegehäuse mit integrierter Funktionsanzeigelampe und Kontaktstiften für den Einschub in eine Steckdose oder dergleichen zum Verdampfen von insektizidem Wirkstoff aus in einen Plättchenkanal mit Plättcheneinführungsschlitzen an den Gehäuseseitenflächen einzuschiebenden und flach an eine Heizfläche einer elektrischen Heizplatte in dem Gehäuse anzulegenden Plättchen, wobei die Heizplatte senkrecht in bezug auf die Kontaktstifte in dem Gehäuse angeordnet ist.

Ein elektrisches Gerät dieser Art wird in der DE-A- 27 30 855 beschrieben. In dem zugehörigen diskusförmigen Gehäuse werden eine scheibenförmige Heizung und eine Wirkstoffplatte aufrecht aneinanderliegend angeordnet. Die Platte befindet sich unmittelbar hinter einem für den verdampften Wirkstoff durchlässigen, sich bei Betrieb im wesentlichen vertikal erstreckenden Gitter, das einen Teil der Vorderseite des Gehäuses bildet. Die Platte wird über einen horizontalen Kanal durch einen in der Gehäuseseitenfläche befindlichen Schlitz in die Arbeitsposition gebracht. Der Kanal kann sich quer durch das Gehäuse erstrecken. Das Abdampfen des Wirkstoffs erfolgt praktisch ausschließlich durch Diffusion durch das offene Gitter auf der Gehäusevorderseite; an der Gehäuserückseite vorgesehene Be- und Entlüftungsschlitze sind für die von der Platte kommenden Dämpfe praktisch nicht zugänglich. Ein Nachteil des bekannten Geräts besteht darin, daß sich die verdampfte Substanz im Umgebungsraum normalerweise nicht durch Konvektion sondern nur durch Molekularbewegungen aufgrund des durch Verdampfung aufrechterhaltenen Konzentrationsgefälles verteilen kann. Besonders nachteilig ist eine Kondensatbildung des verdampften Wirkstoffs an den entsprechenden Austrittsöffnungen. Eventuell muß ein Ventilator zum Verteilen bzw. Umwälzen der verdampften Substanz herangezogen werden.

Aus der US-A-2931880 ist ein elektrisches Gerät zum Verdampfen von Wirkstoff aus einem Plättchen bekannt, bei welchem das Plättchen in einem konvektiven Luftstrom vor einer Heizplatte angeordnet ist. Hierbei ist das Plättchen aber nur durch Anfassen von Hand nach oben aus dem Gerät zu entfernen. Beim Auswechseln kommt man also mit dem gegebenenfalls warmen und noch Reste von insektizidem Wirkstoff enthaltenden Plättchen in Berührung. Des weiteren liegt das Plättchen bei diesem Stand der Technik nicht direkt an der Heizplatte an, so daß die Heizplatte weit über die zum Abdampfen des Wirkstoffs an sich erforderliche Temperatur erhitzt werden muß. Ein großer Teil der Heizenergie geht daher ungenutzt verloren und es sind sehr hohe Heiztemperaturen erforderlich, um schwer abdampfbare Substanzen aus dem jeweiligen Plättchen herauszutreiben. Ferner stellt sich durch die relativ großen Öffnungen und das große Innenvolumen des bekannten Gerätes ein Konvektionsstrom von geringer Geschwindigkeit ein, die aber für die Verdampfung von insektizidem Wirkstoff eine deutlich verminderte Leistungsfähigkeit mit sich bringt. Grundsätzlich ist das Gerät nach diesem Stand der Technik nämlich für das Verdampfen von deodorierenden Wirkstoffen ausgelegt. Diese besitzen einen wesentlich niedrigeren Verdampfungspunkt als in Plättchen eingelassene insektizide Wirkstoffe. Während deodorierende Wirkstoffe bereits bei Raumtemperatur verdampfen, müssen insektizide Wirkstoffe wie Pyrethrum oder dergleichen enthaltende Plättchen auf ca. 120 °C elektrisch erwärmt werden, um zu verdampfen.

Ein weiteres, in einen elektrischen Wandanschluß einzusteckendes Verdampfungsgerät für insektiziden Wirkstoff wird in der DE-A-28 25 674 beschrieben. Das zugehörige Gehäuse besteht aus einer unteren Kammer mit Lufteinlaßöffnungen und einer oberen Kammer mit Luftauslaßöffnungen, an der Grenze zwischen unterer und oberer Kammer werden ein elektrischer Heizwiderstand und vertikal darüber auf einem Rost aus Stiften oder Zinken eine Wirkstofftablette an-geordnet. Die Tablette, der sie tragende Rost und das Heizelement werden so ausgebildet und angeordnet, daß das Heizelement - außer seiner eigentlichen Aufgabe, nämlich dem Verdampfen des Wirkstoffs - durch Konvektion einen Luftstrom in vertikaler Richtung durch die Lufteinlaßöffnungen in das Gehäuse hinein, im Gehäuse um die Wirkstofftablette herum und dann durch die Luftauslaßöffnungen wieder aus dem Gehäuse heraus erzeugen kann. Der zum Aufheizen der Wirkstofftablette vorgesehene Widerstand muß im bekannten Gerät weit über die zum Abdampfen des Wirkstoffs an sich erforderliche Temperatur erhitzt werden, weil ein unmittelbarer Kontakt zwischen Tablette und Heizelement fehlt. Ein großer Teil der Heizenergie geht daher ungenutzt verloren und es sind sehr hohe Heiztemperaturen erforderlich, um schwer abdampfbare Substanzen aus der jeweiligen Tablette herauszutreiben. Nachteilig ist auch die im bekannten Gerät die Funktion anzeigende Glimmlampe, weil die Lampe dort eine Umlenkung des konvektiven Luftstroms bewirkt und damit das Abführen des Wirkstoffs stört.

Der Erfindung liegt die Aufgabe zugrunde, ein elektrisches Gerät zum Verdampfen von insektiziden Wirkstoff enthaltenden Plättchen bzw. Mats zu schaffen, in welchem ein Konvektionsgasstrom im Bereich des zu verdampfenden Plättchens konzentriert und trotz relativ niedriger Heiz- und Gerätetemperatur eine Wirkstoffkondensatbildung am Geräteausgang vermieden wird. Das Gerät soll außerdem so ausgebildet werden, daß das Nachfüllen oder der Austausch von Wirkstoffplättchen ohne Schwierigkeiten von der Seite her ohne die Gefahr der Verletzung durch Berührung mit stromleitenden und/ oder erhitzten Elementen erfolgen kann.

Bei einem elektrischen Gerät der eingangs bezeichneten Art wird diese Aufgabe gemäß der Erfindung dadurch gelöst, daß in dem Gehäuse ein bei eingeschobenem Plättchen im wesentlichen geschlossener, L-förmiger sowie an der in dem längeren Schenkel angeordneten Heizplatte vorbeiführender Luftkanal ausgebildet ist, der einen unterhalb der Heizplatte angeordneten Luftansaugschlitz in der Gerätevorderseite mit einem oberhalb des Plättchenkanals angeordneten Abdampfschlitz in der Gehäuseoberseite miteinander verbindet, wobei sich der Plättchenkanal und der Luftkanal im Bereich vor der Heizfläche kreuzen und der Querschnitt des Luftkanals kurz oberhalb des Plättchenkanals stark gegenüber dem Luftkanalquerschnitt im Bereich des Plättchenkanals verengt ist.

In dem erfindungsgemäßen Gerät wird die strömende Luft nach Art der Kaminluft an der auf die Verdampfungstemperatur erhitzten Tablette vorbeigeführt, so daß die Luft das verdampfte Produkt mitnimmt. Der Luftkanal innerhalb des Gehäuses beginnt, zunächst etwa horizontal an einem in der Gehäusevorderseite vorgesehenen Ansaugschlitz, der sich beispielsweise oberhalb einer Funktionsanzeigelampe befindet. Von der Lampe ausgehende Funktionsstörungen sind also nicht zu erwarten. Innerhalb des Gehäuses wird der Kanal unterhalb der Heizplatte in die Vertikale abgeknickt, um zu erreichen, daß das jeweils eingelegte Plättchen und die Heizplatte bzw. deren Heizfläche aufrecht im konvektiven Luftstrom stehen und ein Temperaturgefälle zwischen angesaugter und abgeleiteter Luft entsteht. Durch die Konstruktion wird erreicht, daß die Temperatur in Richtung auf den Abdampfschlitz steigt, wodurch gewährleistet wird, daß der Wirkstoff tatsächlich nach oben hin abdampft und auch die Bildung von Kondensat an der Abdampföffnung trotz relativ niedriger Gehäusetemperatur weitestgehend vermieden wird.

Das erfindungsgemäße Gerät besitzt einen Plättcheneinführkanal, der sich in horizontaler Richtung parallel zur Heizfläche an der Heizplatte vorbei erstreckt, derart, daß sich der Luftkanal und der Plättchenkanal im Bereich vor der Heizfläche kreuzen. Wegen der im Bereich der Heizfläche starken Erhitzung und der Kaminwirkung des Teils des Luftkanals oberhalb der Heizplatte wird außer durch den Ansaugschlitz auf der Gehäusevorderseite auch Luft durch die Plättchenein- und ausfuhrschlitze an den Gehäuseseitenflächen angesaugt. Die durch drei Schlitze eines bestimmten Gesamtquerschnitts angesaugte Luft muß somit durch den viel kleineren Querschnitt des Abdampfschlitzes "abgeblasen" werden. Die mit dem verdampften Wirkstoff beladene Luft wird also auf dem Wege von der Heizplatte zum Abdampfschlitz im Sinne der Kontinuitätsgleichung von Strömungen stark beschleunigt.

Anhand der schematischen Darstellung eines Ausführungsbeispiels werden Einzelheiten der Erfindung erläutert. Es zeigen:

Fig. 1a, b und c

perspektivische Ansichten eines Verdampfungsgeräts;

Fig. 2

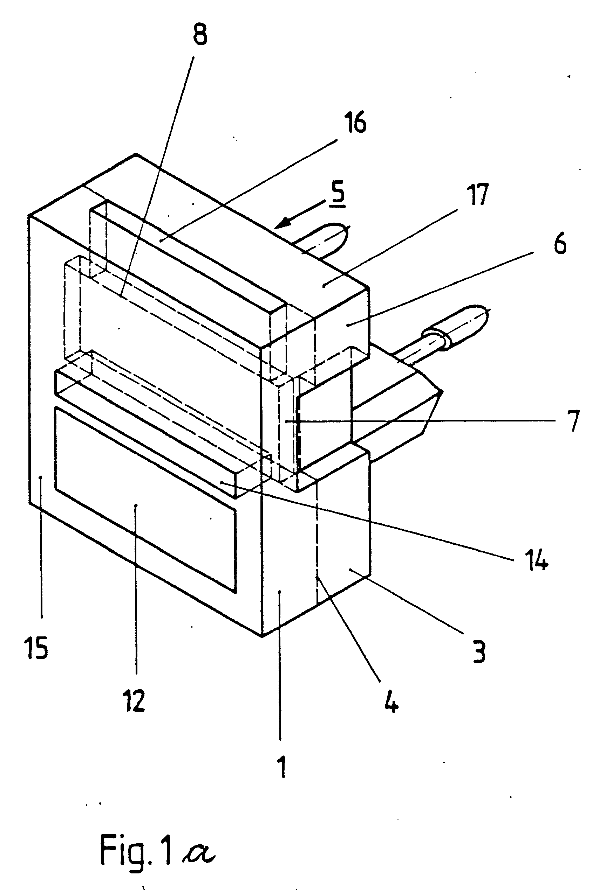

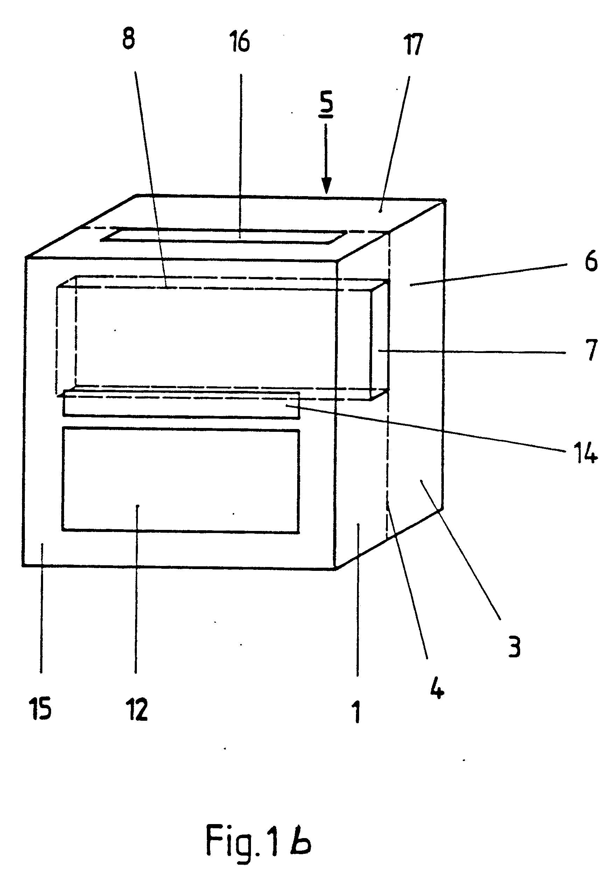

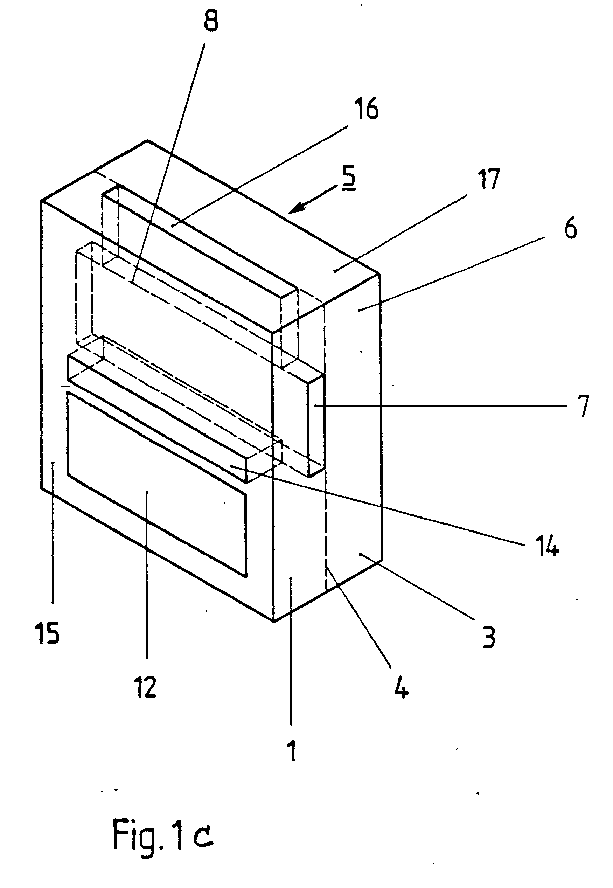

eine Draufsicht vertikal von oben auf das Gerät nach Fig. 1b;

Fig. 3

eine Seitenansicht des Geräts nach Fig. 1b; und

Fig. 4

die Frontansicht eines teilweise geöffneten Geräts nach Fig. 1b.

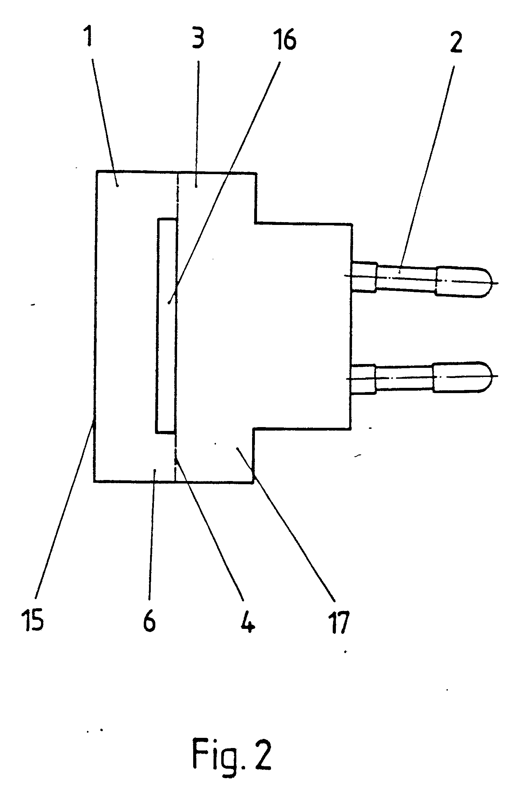

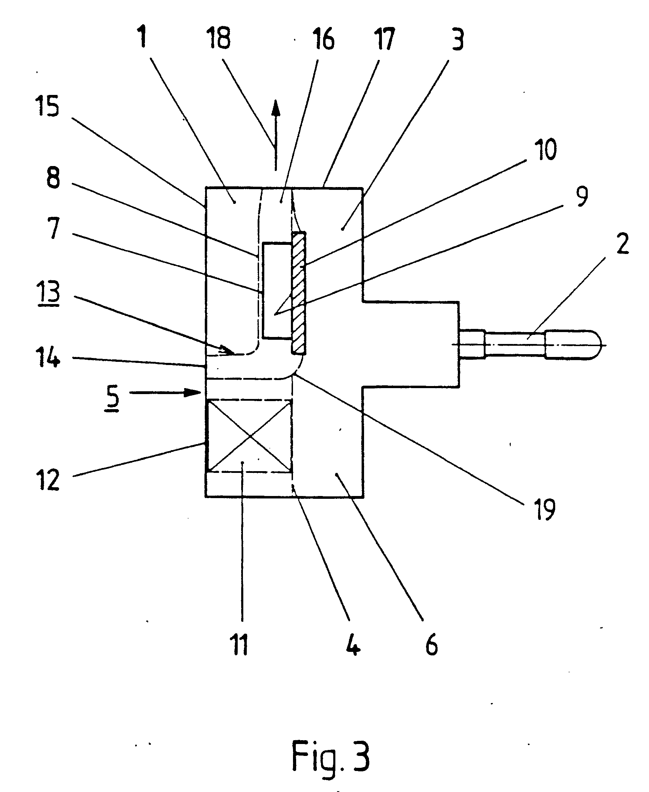

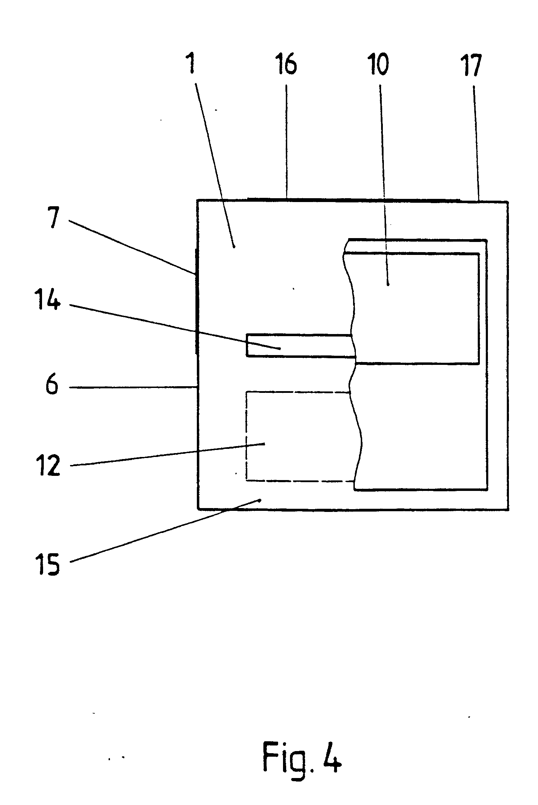

Das zum Verdampfen insektizider Wirkstoffplättchen vorgesehene elektrische Gerät nach Fig. 1 bis 4 besitzt ein Gehäuse mit einer Vorderkappe 1 und einer mit Kontaktstiften 2 zum Einsetzen in eine Steckdose versehenen Rückseitenkappe 3. Vorderkappe 1 und Rückseitenkappe 3 werden längs der gestrichelten Verbindungslinie 4 gekoppelt. Das insgesamt mit 5 bezeichnete Gehäuse besitzt an seinen Seitenflächen 6 je einen Plättcheneinführschlitz 7 zum Einschieben und Abführen von Wirkstoffplättchen. Die sich gegenüberliegenden Plättcheneinführschlitze 7 werden durch einen Plättchenkanal 8 miteinander verbunden. Der Plättchenkanal 8 führt unmittelbar an der Heizfläche 9 einer im Geräteinneren aufrechtstehend angeordneten Heizplatte 10 vorbei. Die Heizplatte 10 wird über die Kontaktstifte 2 mit elektrischer Energie versorgt. Bei Betrieb liegt ein in den Plättchenkanal 8 eingeführtes Wirkstoffplättchen flach an der Heizfläche 9 an. Im Bereich unterhalb der Heizplatte wird innerhalb des Gehäuses 5 eine die Funktion des Gerätes gegebenenfalls anzeigende Glimmlampe 11 oder dergleichen mit Leuchtschirm 12 vorgesehen. Auch die Glimmlampe 11 wird über die Kontaktstifte 2 mit Spannung beaufschlagt.

Erfindungsgemäß werden ein in den Plättchenkanal 8 eingeführtes Wirkstoffplättchen und zumindest die Heizfläche 9 der Heizplatte 10 in einen als Kamin wirkenden, insgesamt mit 13 bezeichneten Luftkanal gesetzt. Der Luftkanal besitzt einen Ansaugschlitz 14 auf der Gehäusevorderseite 15 und einen Auslaß- bzw. Abdampfschlitz 16 auf der Gehäuseoberfläche 17 oberhalb der Position des Wirkstoffplättchens an der Heizplatte 10. Der Luftkanal 13 wird im Bereich der Heizfläche 9 so ausgebildet, daß ein in den Plättchenkanal 8 eingeschobenes Wirkstoffplättchen ausreichend Platz findet. Kurz oberhalb des Plättchens wird der Luftkanal 13 stark, z.B auf wenige mm, eingeengt. Im Bereich der Heizfläche 9 kann der Luftkanal 13 relativ weit sein, derart, daß an dem eingeschobenen Plättchen ausreichende Luftmengen in Richtung auf den Abdampfschlitz 16 vorbeistreichen können. Wegen des zunächst relativ weiten und dann stark verringerten Luftkanalquerschnitts wird im Bereich oberhalb des Plättchens ein starker Konvektionsstrom mit Kaminwirkung erzeugt und demgemäß der verdampfte Wirkstoff mit relativ hoher Geschwindigkeit in Pfeilrichtung 18 aus dem Abdampfschlitz 16 abgeblasen.

Auf seiner Ansaugseite wird der Luftkanal 13 mit einem Knick 19 unterhalb der Heizplatte 10 ausgestattet, um ein Ansaugen von der Gerätevorderseite 15 her zu ermöglichen und auf diese Weise eine Funktionsanzeigelampe, z.B. die Glimmlampe 11, aus dem Konvektionsstrom herauszuhalten.

Bezugszeichenliste

  1 = Vorderkappe
  2 = Kontaktstift
  3 = Rückseitenkappe
  4 = Verbindungslinie
  5 = Gehäuse
  6 = Seitenfläche
  7 = Plättcheneinführschlitz
  8 = Plättcheneinführkanal
  9 = Heizfläche
  10 = Heizplatte
  11 = Glimmlampe
  12 = Leuchtfenster
  13 = Luftkanal
  14 = Luftansaugschlitz
  15 = Gehäusevorderseite
  16 = Abdampfschlitz
  17 = Gehäuseoberseite
  18 = Pfeil
  19 = Knick von 13

**Ansprüche**

1.  Elektrisches Gerät bestehend aus einem Gerätegehäuse (5) mit integrierter Funktionsanzeigelampe (11) und Kontaktstiften (2) für den Einschub in eine Steckdose oder dergleichen zum Verdampfen von insektizidem Wirkstoff aus in einen Plättchenkanal (8) mit Plättcheneinführungsschlitzen (7) an den Gehäuseseitenflächen (6) einzuschiebenden und flach an eine Heizfläche (9) einer elektrischen Heizplatte (10) in dem Gehäuse (5) anzulegenden Plättchen, wobei die Heizplatte (10) senkrecht in bezug auf die Kontaktstifte (2) in dem Gehäuse (5) angeordnet ist, dadurch gekennzeichnet, daß in dem Gehäuse (5) ein bei eingeschobenem Plättchen im wesentlich geschlossener, L-förmiger sowie an der in dem längeren Schenkel angeordneten Heizplatte (10) vorbeiführender Luftkanal (13) ausgebildet ist, der einen unterhalb der Heizplatte (10) angeordneten Luftansaugschlitz (14) in der Gerätevorderseite (15) mit einem oberhalb des Plättchenkanals (8) angeordneten Abdampfschlitz (16) in der Gehäuseoberseite miteinander verbindet, wobei sich der Plättchenkanal (8) und der Luftkanal (13) im Bereich vor der Heizfläche (9) kreuzen und der Querschnitt des Luftkanals (13) kurz oberhalb des Plättchenkanals (8) stark gegenüber dem Luftkanalquerschnitt im Bereich des Plättchenkanals (8) verengt ist.

2.  Elektrisches Gerät nach Anspruch 1, dadurch gekennzeichnet, daß der Luftkanal (13) oberhalb der Funktionsanzeigelampe (11) ausgebildet ist.

3.  Gerät nach Anspruch 1 oder 2, dadurch gekennzeichnet, daß Luftkanal (13) und Heizfläche (9) im Hinblick auf eine relativ zur Ansauggeschwindigkeit erhöhte Luftabblasgeschwindigkeit sowie in Richtung des Luftstroms zunehmende Lufttemperatur geformt sind.

4.  Gerät nach einem der vorangehenden Ansprüche, dadurch gekennzeichnet, daß die Plättcheneinführungsschlitze (7) am jeweiligen Längsende des Plättchenkanals (8) als zusätzliche Luftansaugschlitze des Luftkanals (13) ausgebildet sind.

**Claims**

1.  Electrical appliance consisting of an appliance housing (5) with integrated function indicator lamp (11) and contact pins (2) for the insertion into a plug socket or the like for the evaporation of insecticidal substance from a platelet which is to be pushed into a platelet channel (8) with platelet introduction slots (7) at the lateral housing surfaces (6) and to be laid flat against a heating surface (9) of an electrical heating plate (10) in the housing (5), wherein the heating plate (10) is arranged in the housing (5) to be perpendicular with respect to the contact pins (2), characterised thereby, that an air channel (13) is formed in the housing (5), which channel is L-shaped and substantially closed when the platelet is pushed in as well as leads past the heating plate (10) arranged in the longer limb and which connects an air induction slot (14), which is arranged in the front housing side (15) and below the heating plate (10), with a vapour outlet (16), which is arranged in the upper housing side and above the platelet channel (8), wherein the platelet channel (8) and the air channel (13) intersect in the region in front of the heating surface (9) and the cross-section of the air channel (13) shortly above the platelet channel (8) is narrowed greatly by comparison with the air channel cross-section in the region of the platelet channel (8).

2. Electrical appliance according to claim 1, characterised thereby, that the air channel (13) is formed above the the function indicator lamp (11).

3. Electrical appliance according to claim 1 or 2, characterised thereby, that the air channel (13) and the heating surface (9) are shaped with a view to an air exhaust speed which is increased relative to the induction speed as well as to an air temperature which increases in the direction of the air current.

4. Electrical appliance according to one of the preceding claims, characterised thereby, that the platelet introduction slots (7) are formed at the respective longitudinal end of the platelet channel (8) as additional air induction slots of the air channel (13).

**Revendications**

1. Appareil électrique comprenant un boîtier (5) avec voyant indicateur de fonction intégré (11) et fiches de contact (2) pour le branchement dans une prise électrique ou similaire pour la vaporisation d'un insecticide à travers un canal à plaquette (8) pourvu de fentes (7) d'introduction de plaquettes situées sur les faces latérales (6) de ce boîtier et permettant de placer la plaquette contre une surface chauffante (9) d'une plaque chauffante électrique (10) logée à l'intérieur de ce boîtier (5), cette plaque chauffante (10) étant disposée perpendiculairement aux fiches de contact (2) engagées à l'intérieur de ce boîtier, caractérisé par le fait qu'à l'intérieur du boîtier (5) est réalisé un canal à air (13) en forme de L et étant pour l'essentiel fermé en présence d'une plaquette, ce canal passant à côté de la plaque chauffante (10) située sur la branche la plus longue de la forme en L et reliant une fente d'aspiration d'air (14), disposée en-dessous de cette plaque chauffante (10) sur la face avant de l'appareil (15), à une fente d'évaporation (16) disposée au-dessus du canal à plaquette (8) sur la face supérieure du boîtier, ce canal à plaquette (8) et le canal à air (13) se croisant dans la zone située devant la surface chauffante (9) et, en outre, la section du canal à air (13) étant fortement resserrée juste au-dessus du canal à plaquette (8) par rapport à sa section prise au niveau de ce dernier.

2. Appareil électrique selon la revendication 1, caractérisé par le fait que le canal à air (13) est réalisé au-dessus du voyant indicateur de fonction (11).

3. Appareil selon l'une ou l'autre des revendications 1 ou 2, caractérisé par le fait que le canal à air (13) et la surface chauffante (9) sont adaptés pour obtenir une vitesse d'évacuation d'air relativement plus élevée que la vitesse d'aspiration, et une température d'air augmentant en direction du flux d'air.

4. Appareil selon l'une quelconque des revendications 1 à 3, caractérisé par le fait que les fentes (7) d'introduction de plaquette, situées respectivement aux extrémités longitudinales du canal à plaquette (8), servent également de fentes supplémentaires d'aspiration d'air du canal à air (13).

Fig. 1 *a*

Fig.1 b

Fig. 1 c

Fig. 2

Fig. 3

Fig. 4